# EUROPÄISCHE PATENTANMELDUNG

(11) **EP 2 026 202 A1**
(43) Veröffentlichungstag der Anmeldung: **18.02.2009**
(21) Anmeldenummer: 07016138.5
(22) Anmeldetag: 16.08.2007
(51) Int. Cl.: G06F 9/44, G06F 3/048

(54) **Verfahren zur Visualisierung von Selektionskontexten in einem Automatisierungsumfeld**

(71) Anmelder: SIEMENS AKTIENGESELLSCHAFT, 80333 München (DE)
(72) Erfinder: Heller, Rainer, 90542 Eckental (DE); Moritz, Soeren, 91353 Wimmelbach (DE)

(57) **Zusammenfassung**

Beschrieben wird ein Verfahren zur Visualisierung, Auswahl und/oder Bearbeitung von zumindest einer Struktur bestehend aus zumindest zwei Objekten. Jedes Objekt weist zumindest eine ihm zugeordnete Eigenschaft und/oder ein ihm zugeordnete Verhaltensbeschreibungen und/oder ein ihm zugeordnete Strukturbeschreibungen auf. Die Auswahl des zur Visualisierung, Auswahl und/oder Bearbeitung gebrachten Objektes und dessen Eigenschaften und/oder Verhaltensbeschreibungen und/oder Strukturbeschreibungen ist definierbar durch einen Selektionskontext und zumindest zwei Selektionskontexte sind gleichzeitig aktiviert.

Die Synchronisation jedes Objektes und der zugeordneten Eigenschaften und/oder Verhaltensbeschreibungen und/oder Strukturbeschreibungen erfolgt über Selektionskontext und die Synchronisation aller Objekte und der zugeordneten Eigenschaften und/oder Verhaltensbeschreibungen und/oder Strukturbeschreibungen erfolgt dabei gleichzeitig.

## Beschreibung

### Fachgebiet der Erfindung

Die Erfindung betrifft ein Verfahren gemäß dem Oberbegriff des Patentanspruches 1.

In der Datenverarbeitung besteht häufig die Notwendigkeit, komplexe Datenzusammenhänge darzustellen. Insbesondere in einem Umfeld, in dem eine Vielzahl realer Objekte und Strukturen mit ebenso vielfältigen Wechselwirkungen miteinander interagieren, ist eine Darstellung wichtig, welche dem Benutzer die Eigenschaften und das Verhalten in übersichtlicher Form zur Anzeige bringt.
Sowohl das Lernen als auch die Analyse von Zusammenhängen erfolgt beim Menschen durch den Vergleich mit Bestehendem, beispielsweise durch Vergleich der neuen mit bestehenden Daten und Strukturen. Je nach Aufgabenstellung müssen dabei unterschiedliche Daten zur Ansicht gebracht werden.

Im Folgenden versteht man unter dem Begriff Anwendung ein System zur Darstellung, Auswahl und Bearbeitung von Daten und Strukturen. Hier bei sind insbesondere Daten aus dem Umfeld der Automatisierungstechnik zu verstehen, jedoch ist die Ausübung nicht auf dieses technische Gebiet beschränkt.
Die Datenansicht ist eine definierte Sicht zur Darstellung, Auswahl und Bearbeitung bestimmter Daten (Eigenschaften und Verhaltenbeschreibungen) und/oder Strukturen aus der Gesamtdatenmenge. Ein Kontext ist dabei ein Verweis auf Daten und/oder Strukturen, der von mehreren Datenansichten referenziert und zur Synchronisation der Ansichten verwendet werden kann.
Durch den Selektionskontext kann per Anwenderauswahl von Daten und/oder Strukturen ein Kontext gesetzt werden.

### Stand der Technik

Heutige Datenverarbeitungsanwendungen erlauben in beschränktem Umfang die gleichzeitige Ansicht unterschiedlicher Daten:
eine (Anlagen-)Struktur und die zugeordneten Objekteigenschaften der Struktur. Der Vergleich von Daten ist dabei schwer möglich.

Über eine Anlagenstruktur kann bislang der zu betrachtende Kontext festgelegt werden. Zusätzliche Ansichten, die sich den gleichen Kontext teilen, stellen sich dann auf den neuen Kontext (definiert durch das ausgewählte Objekt) ein und zeigen die zum Objekt gehörenden Daten an. Dabei können z. B. Eigenschaften eines Objektes Förderband, genannt "Förderer1" und eines "parallelen" Objektes "Förderer2" nicht gleichzeitig dargestellt werden, da die Eigenschaftsansicht nur einmal existiert und sich mit dem Kontextwechsel verändert.

Wenn hier ein Vergleich gewünscht ist, so muss er durch den Benutzer durch Merken der Inhalte (beispielsweise auch mit Hilfsmitteln) erfolgen.

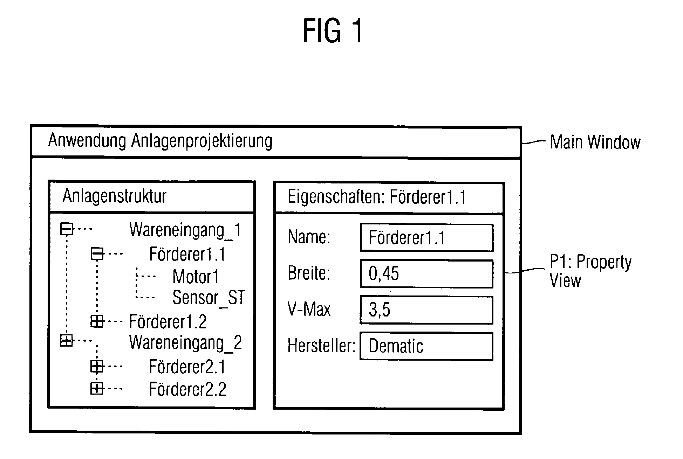

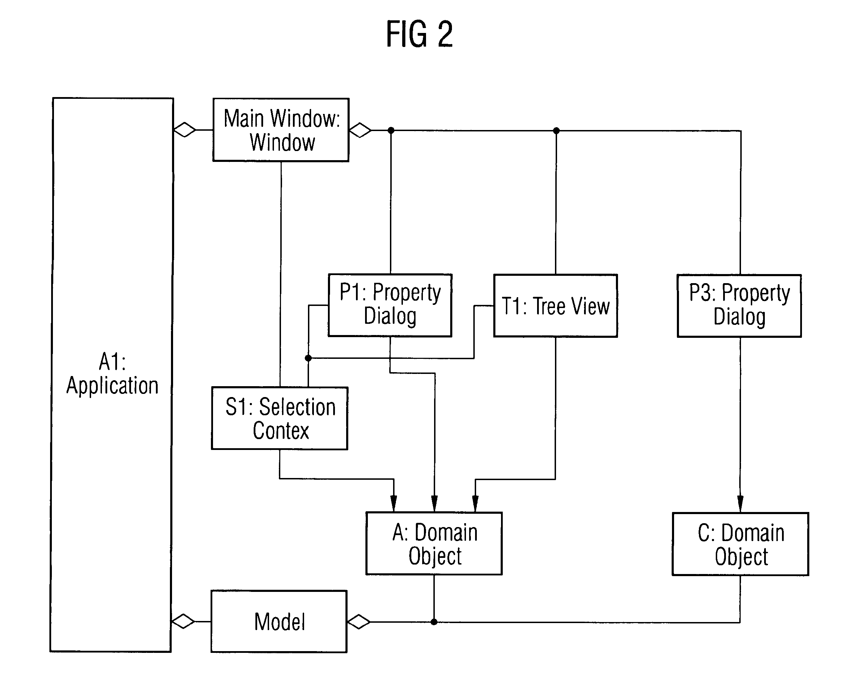

In einer anderen bekannten Realisierung kann über die Anlagenstruktur ein Objekt, z. B. der bereits erwähnte "Fördererl" ausgewählt und zu diesem Kontext ein Eigenschaftsfenster geöffnet werden. Durch die Auswahl weiterer (gleichartiger) Objekte "Förderer2" in der Anlagenhierarchie kann ein weiteres Eigenschaftsfenster parallel geöffnet werden. Dies ist beispielsweise in der Figur 1 und Figur 2 dargestellt. In diesem Fall ist der direkte Vergleich der Eigenschaften der Objekte möglich. Um dieses zu erreichen muss aber mindestens eines der beiden Eigenschaftsfenster vom Selektionskontext getrennt werden. Dadurch geht die Anpassbarkeit durch den Selektionskontext (bzw. durch einfache Benutzerkommandos) verloren.

In einer Anwendung zur Projektierung einer Anlage sind die Anlagenstruktur und die Eigenschaften einzelner Anlagenkomponenten zu vergleichen. Die Struktur wird in einer Anlagenstruktursicht dargestellt.
Figur 1 zeigt diese Sicht in einem Fenster, Main Window, in einer Baumstruktur, T1: Tree View genannt. In einem separaten Dialog werden die Eigenschaften zu einem jeweils ausgewählten Objekt, auch Property View genannt.
In dieser bekannten Anwendung gibt es nur einen Selektionskontext pro Anwendung. Die Synchronisation der Fenster (Dialoge / Ansichten) einer Anwendung erfolgt nur über den einen Selektionskontext und ist fest vorgegeben.
Wenn es erlaubt ist, mehrere gleichartige Fenster (Dialoge /Ansichten) zu öffnen, dann verweisen diese auf ein konkretes Domain-Objekt des Modells und werden nicht über den Selektionskontext synchronisiert. Es wird bei mehreren Fenstern jeweils nur das selektierte Objekt aktualisiert.

Ein Nachteil des bekannten Ansatzes: der Selektionskontext kann nicht oder nur noch bedingt zur Synchronisation unterschiedlicher Datenansichten verwendet werden, da beispielsweise unklar ist, welches Eigenschaftsfenster bei einer neuen Auswahl in der Anlagenstrukturübersicht angepasst werden soll. Dadurch werden Vergleiche von z.B. hierarchischen Strukturen unmöglich, weil die einzelnen Ansichten nicht parallel und unabhängig von Anwender angepasst werden können.

Eine weitere Möglichkeit, um einen Vergleich zwischen Datenstrukturen innerhalb eines Projektes zu erhalten, wäre die Einführung einer Vergleichsoperation, dessen Ergebnis in einem separaten Fenster visualisiert werden könnte. Nachteil dieses Ansatzes ist, dass eine weitere spezielle Sicht eingeführt wird und vom Benutzer dann wiederum interpretiert werden muss. Dies benötigt einen erhöhten Lernaufwand für den Benutzer und eine zusätzlichen Implementierungsaufwand (für jede einzelne Vergleichsfunktion muss eine neue Sicht vorher programmiert werden).

Nachteilig ist in dieser Lösung weiterhin, dass in der Ergebnisansicht keine direkten Manipulationen an den zugrunde liegenden Roh-Daten vorgenommen werden können.

Aufgabe der Erfindung ist es, eine bessere Unterstützung bei der Darstellung von Daten und Strukturen zu bieten.
Weiterhin ist es Aufgabe der Erfindung, eine Vergleichbarkeit der Daten und Strukturen zu gewährleisten.

### Darstellung der Erfindung

Diese Aufgabe wird gelöst durch ein Verfahren gemäß den Merkmalen des Anspruchs 1.

Es handelt sich um ein Verfahren zur Visualisierung, Auswahl und/oder Bearbeitung von zumindest einer Struktur bestehend aus zumindest zwei Objekten. Jedes Objekt weist zumindest eine ihm zugeordnete Eigenschaft und/oder ein ihm zugeordnete Verhaltensbeschreibung auf. Die Auswahl des zur Visualisierung, Auswahl und/oder Bearbeitung gebrachten Objektes und dessen Eigenschaften und/oder Verhaltensbeschreibung ist definierbar durch einen Selektionskontext und zumindest zwei Selektionskontexte sind gleichzeitig aktiviert.
Die Synchronisation jeder Objektsicht und der darzustellenden Objektdaten (Eigenschaften und Verhaltensbeschreibung) und - Strukturen erfolgt über den gesetzten Selektionskontext. Die Synchronisation aller Objektdaten und -strukturen erfolgt dabei gleichzeitig.

Vorteilhafte Ausgestaltungen und Weiterbildungen sind in den Unteransprüchen angegeben.

### Vorteile der neuen Anwendung sind beispielsweise:

Pro Anwendung kann es eine bevorzugte Anzahl (mindestens einen) von Selektionskontextobjekten geben.

Jeder gewünschte Selektionskontext kann zur Anzeige gebracht werden, beispielsweise als Rechteck ("ein Fenster im Fenster").
Vorteilhafterweise wird jeder dieser Selektionskontexte durch ein eigenes Fenster innerhalb einer Anwendung repräsentiert. Fenster, Dialoge und auch Ansichten können einem beliebigen Selektionskontext zugeordnet werden, in dem sie beispielsweise mittels eines Zeigers auf das, einen Selektionskontext repräsentierende Fenster gezogen werden (bekannt ist die Verwendung von Icons mit Hilfe eines Mauszeigers). Dieser Mechanismus ist auch bekannt unter dem Namen "drag & drop". Umgekehrt können sie auch wieder von dem Selektionskontext entkoppelt werden, in dem sie in der Bedienoberfläche per Mausaktion aus dem Fenster wieder "herausgezogen" werden. Änderungen werden nach demselben Konzept durchgeführt, durch Verschiebung innerhalb des Darstellungsbereiches.

Alternativ kann die Selektion von Elementen in einer Datensicht zum Setzen des ihr zugeordneten Selektionskontextes führen.
Die aktuelle Darstellung einer Anwendung mit den verwendeten Datensichten, der Anzeige von Selektionskontexten und der Zuordnung von Datensichten zu einem Selektionskontext kann vorteilhafterweise unter einer Kennung abgespeichert und zu einem späteren Zeitpunkt wieder geladen und zur Anzeige gebracht werden. So wird dem Anwender die Möglichkeit gegeben, einfach und schnell auch zu verschiedenen Zeitpunkten vergleichbare Datenauswertungen zu reproduzieren. Vorteilhafterweise wird diese Information unter einer eindeutigen Kennung abgelegt.

Datensichten können ihren Inhalt auf Basis eines sich ändernden Selektionskontextes anpassen. Der Selektionskontext definiert dabei den Rahmen für die Synchronisation von darin enthaltenen Datensichten.

Beim Öffnen einer neuen Datensicht aus einer bestehenden Datensicht kann der neuen Datensicht der Selektionskontext der bestehenden Datensicht zugeordnet werden.

Die Synchronisation der Fenster (Dialoge / Ansichten) erfolgt über den Selektionskontext der ihm / ihnen zugeordnet ist. Damit ist beispielsweise ein paralleles "Durchwandern" der Anlagenstrukturen von parallelen Objekten unter gleichzeitiger Synchronisation der dazugehörigen Eigenschaftsfenster garantiert.

Besonders vorteilhaft ist die Verwendung von mindestens zwei Selektionskontextobjekten innerhalb einer Anwendung beim Vergleich von hierarchischen Anlagenstrukturen beispielsweise im Engineering. Nur durch die Visualisierung der Selektionskontexte kann der Anwender genau zuordnen, welche Fenster (Dialoge / Ansichten) gemeinsam synchronisiert werden. So können auch komplexe Daten und Strukturen vom Anwender wirklich und sinnvoll verglichen werden.
Durch die Visualisierung der Selektionskontexte wird es dem Anwender ermöglicht, synchronisierte Daten-Sichten frei nach seiner konkreten Aufgabenstellung zusammenzustellen und das gewünschte Verhalten festzulegen.

Ein wesentlicher Vorteil besteht darin, dass für die gewünschten Auswertungen keine zweite oder weitere Anwendung gestartet werden muss. Durch das Öffnen weiterer Anwendungen könnten weitere Selektionskontextobjekte angelegt werden. Da die Fenster dieser Anwendungen sich den gleichen Selektionskontext teilen, besteht eine eindeutige Zuordnung. Sollen aber Daten des gleichen Projekts verglichen werden, müssen die Projektdaten in der Realisierung auf einem separaten Server abgelegt werden und es muss eine Client-Server-Architektur vorliegen, was aufwändiger ist und bei den aktuellen Implementierungen häufig nicht der Fall ist. Durch mehrere geöffnete Applikationen auf einem Darstellungsbereich, beispielsweise einem Anzeigegerät, wird viel Platz verbraucht durch Bereiche wie Tool-Leisten, Menu-Leisten, Titel-Leisten, welche dann einmal pro Anwendung existieren. Dies ist insbesondere störend, wenn über das Fenster ein Vergleich von Daten erfolgen soll.

Per Definition kann festgelegt sein, dass ein Selektionskontext, der Anzeigenbereich der Anwendung die Darstellung des Selektionskontextes bestimmt nur solange besteht wie ihm Datenansichten zugeordnet sind.
Ein Selektionskontext kann automatisch geschlossen werden, wenn die letzte Datenansicht aus dem Darstellungsbereich des Selektionskontextes entfernt wurde.

### Kurzbeschreibung der Zeichnungen

Im folgenden wird die Erfindung anhand von Ausführungsbeispielen erläutert. Dabei zeigen
- Figur 1: eine Anlagenstruktursicht, wie sie bereits aus dem Stand der Technik bekannt ist.
- Figur 2: zeigt das Objektmodell, welches der bekannten Anwendung zugeordnet ist.
- Figur 3: zeigt im Vergleich dazu den Aufbau der beanspruchten Anwendung, und
- Figur 4: das der Figur 3 zugehörige Objektmodell.

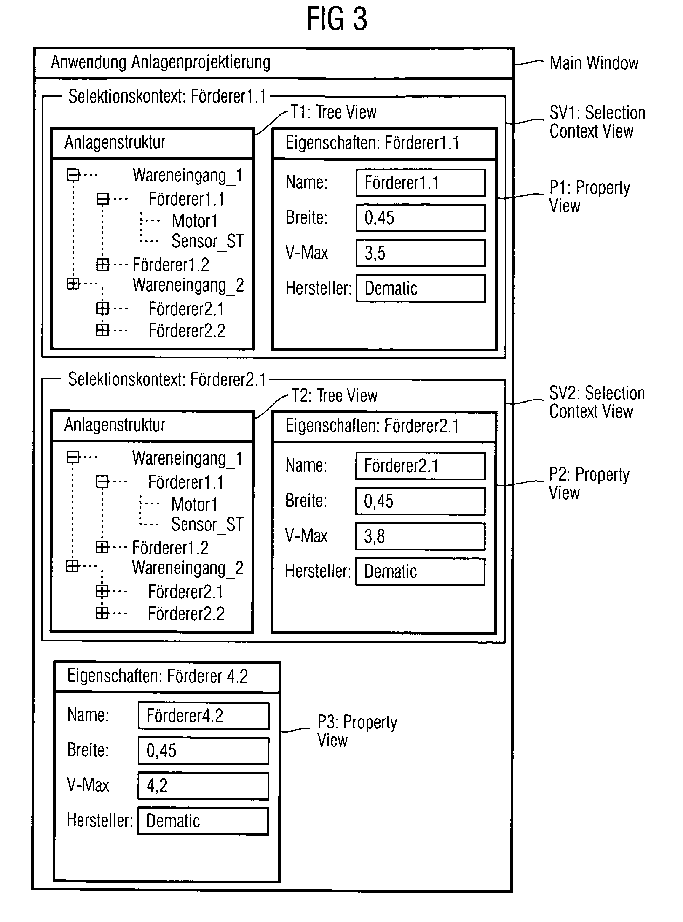

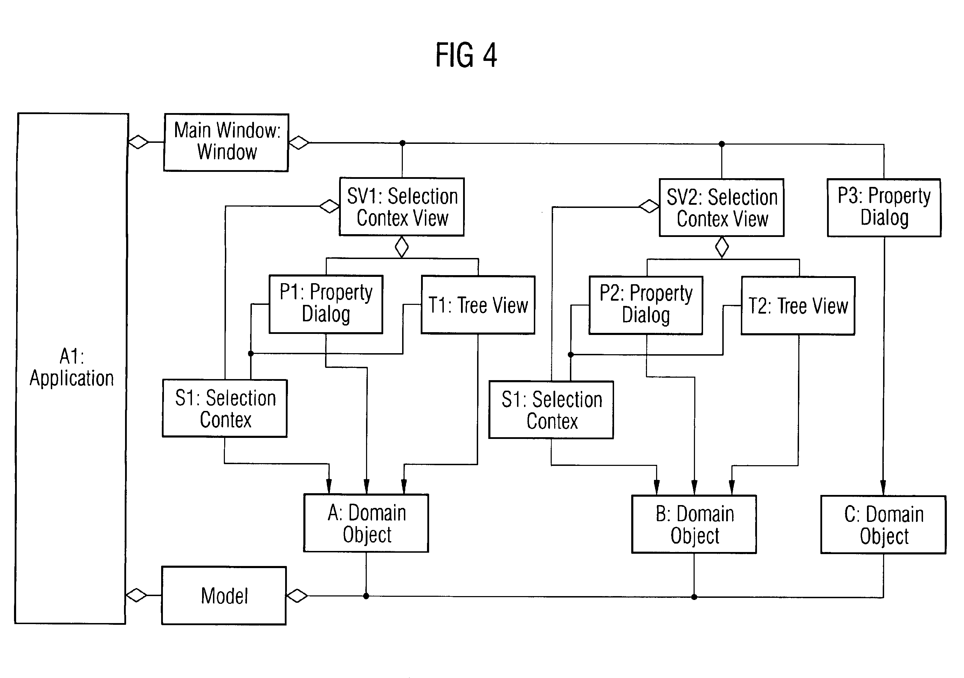

Die Figuren 1 und 2 wurde bereits in der Beschreibungseinleitung kurz beschrieben. Soweit möglich wurden die Bezugszeichen der Figuren 1 und 3 sowie 2 und 4 identisch gewählt. Eine ausführlichere Beschreibung erfolgt daher im Folgenden für die Figuren 3 und 4, welche den Anmeldungsgegenstand näher erläutern.

### Beschreibung der bevorzugten Ausgestaltungsformen

Die Figuren 3 und 4 zeigen eine bevorzugte Ausführungsform der Erfindung.

In einer Anwendung zur Anlagenprojektierung, MainWindow, sind die Anlagenstruktur und die Eigenschaften einzelner Anlagenkomponenten zu vergleichen.
Die Struktur wird in einer Anlagenstruktursicht in Form eines Baumes, T1: Tree View, dargestellt. Die Eigenschaften zu einzelnen Komponenten der Anlagenstruktur können in einem separaten Dialog, P1: Property Dialog, abgerufen werden. Im vorliegenden Beispiel besteht die Struktur aus Wareneingang_1 und Wareneingang_2, welche jeweils mehrere Föderer1.1, 1.2 etc enthalten. Ein Förderer wiederum kann in kleinere Einheiten Motor1 und SensorST untergliedert werden. In der Eigenschaftensicht werden nun die Eigenschaften aufgelistet: Name, Breite, V-Max und Hersteller der Komponente.
Andere Struktur-Elemente können andere Element-Eigenschaften aufweisen.

Bei der klassischen Anwendung von Figur 1 und 2 gibt es nur einen Selektionskontext, die Synchronisation der Fenster erfolgt darüber und ist auch fest vorgegeben. Sofern weitere Fenster zu öffnen sind, verweisen sie auf ein konkretes Domain-Objekt des Modells und werden dann auch nicht mehr über den Selektionskontext synchronisiert.

Figur 3 stellt nun ein Fenster dar, MainWindow, welches zwei vollständige Selektionskontexte SV1 und SV2 zeigt, welche jeweils aus einem Tree View T1, T2 und dem zugeordneten Eigenschaftsfenster Property View P1, P2 besteht. Es kann aber auch eine Darstellung der Ansicht Property View P3 ohne Tree View gewählt werden.
Ausgewählt wurden für das Beispiel der Wareneingang_1 und Wareneingang_2 und hier parallel jeweils der Förderer1.1 und Förderer2.1. Die beiden Eigenschaftsfenster P1 und P2 können vorteilhafterweise direkt untereinander angeordnet werden. So ist ein Vergleich der aktuellen Eigenschaften problemlos möglich. Alternativ dazu wird in einem weiteren Teil des Fensters noch das Eigenschaftsfenster P3 zum Förderer Förderer4.2 (also zugehörig zu Wareneingang_4), jedoch hier ohne die Zusatzinformation des Selektionskontextes, dargestellt.

In dieser Anordnung führt die Auswahl eines neuen Teils in der Anlagenstruktursicht T1 nur zu einer Änderung in der Property View P1. Entsprechend führt eine Änderung von T2 nur zu einer Änderung in der Property View P2. Die Property View P3 dagegen stellt immer den gleichen Inhalt dar, da sie keinem Selektionskontext zugeordnet ist, sondern direkt einen darzustellenden Objektinhalt referenziert.

Figur 4 zeigt das Objektmodell zugehörig zu der beispielhaften Anwendung aus Figur 3, wie die Figur 2 ebenfalls in der Darstellungssprache UML definiert. Die Unified Modeling Language (UML) ist eine von der Object Management Group (OMG) entwickelte und standardisierte Sprache für die Modellierung von Software und anderen Systemen. Im Sinne einer Sprache definiert die UML dabei Bezeichner für die meisten Begriffe, die für die Modellierung wichtig sind, und legt mögliche Beziehungen zwischen diesen Begriffen fest.
Eine Instanz A1 wird beispielsweise durch eine Klasse Application definiert. Eine weitere Klasse wäre Window.
Die Verbindungen zwischen Kästen stellen Beziehungen dar. Eine in der Verbindung eingebaute Raute bedeutet "besteht aus", ein an einem Ende der Verbindung angebrachter Pfeil deutet auf eine gerichtete Beziehung hin.

Dieses Beispiel ist nicht einschränkend zu verstehen, die Definition der Ansichten, Selektionskontexte und Eigenschaften kann durch den Benutzer, wie bereits beschrieben, dynamisch erfolgen.
Der wesentliche Vorteil des beschriebenen Vorgehens liegt in der deutlich vereinfachten Handhabung der Information durch die freie Zusammenstellbarkeit der angezeigten Informationen und die jetzt möglichen Interaktionen und parallel durchgeführten Aktualisierungen.

## Patentansprüche

1. Verfahren zur Visualisierung, Auswahl und Bearbeitung von zumindest einer Struktur bestehend aus zumindest zwei Objekten bei dem jedes Objekt zumindest eine ihm zugeordnete Eigenschaft und/oder ein ihm zugeordnete Verhaltensbeschreibung und/oder Strukturbeschreibung aufweist bei dem die Auswahl des zur Visualisierung, Auswahl und/oder Bearbeitung gebrachten Objektes und dessen Eigenschaften und/oder Verhaltensbeschreibungen und/oder Strukturbeschreibungen definierbar ist durch einen Selektionskontext
**dadurch gekennzeichnet, dass** zumindest zwei Selektionskontexte gleichzeitig aktiviert sind und die Synchronisation jedes Objektes und der zugeordneten Eigenschaften und/oder Verhaltensbeschreibungen und/oder Strukturbeschreibungen über die Selektionskontexte erfolgt und die Synchronisation aller Objekte und der zugeordneten Eigenschaften und/oder Verhaltensbeschreibungen und/oder Strukturenbeschreibungen gleichzeitig erfolgt.

2. Verfahren nach Patentanspruch 1,
**dadurch gekennzeichnet, dass** die Struktur eine Anlagenstruktur im Automatisierungsumfeld ist, und das Objekt ein Teilbereich der Anlagenstruktur ist.

3. Verfahren nach einem der vorigen Patentansprüche,
**dadurch gekennzeichnet, dass** gleichartige Objekte zur parallelen Visualisierung innerhalb einer Anwendung ausgewählt werden und unter gleichzeitiger Synchronisation der zugehörigen gleichartigen Eigenschaften und/oder Verhaltensbeschreibungen und/oder Strukturbeschreibungen ein paralleles Durchwandern der gleichartigen Objekte erlaubt.

4. Verfahren nach einem der vorigen Patentansprüche,
**dadurch gekennzeichnet, dass** ein benutzerdefinierter Selektionskontext mit Hilfe von Befehlen explizit aus einer Objektmenge heraus zugeordnet und/oder gelöscht werden kann.

5. Verfahren nach Patentanspruch 4,
**dadurch gekennzeichnet, dass** eine Zuordnung eines Selektionskontextes durch Bewegen eines selektierten Elementes auf der Visualisierungsebene in einen gewünschten Bereich und/oder eine Freigabe durch Bewegen eines selektierten Elementes aus einem gewünschten Bereich hinaus geschieht.

6. Verfahren nach einem der vorigen Patentansprüche,
**dadurch gekennzeichnet, dass** jeder Selektionskontext in der Visualisierung durch ein eigenes Fenster repräsentiert wird.

7. Verfahren nach einem der vorigen Patentansprüche,
**dadurch gekennzeichnet, dass** die Definition der Zuordnung von Selektionskontexten zu einer Datensicht abgespeichert und zu einem späteren Zeitpunkt wieder reproduziert werden kann.

8. Verfahren nach einem der vorigen Patentansprüche,
**dadurch gekennzeichnet, dass** ein Selektionskontext automatisch geschlossen wird, wenn das letzte Element aus dem Selektionskontext entfernt wurde.
